# EUROPÄISCHE PATENTSCHRIFT

(11) **EP 0 649 780 B1**
(45) Veröffentlichungstag und Bekanntmachung des Hinweises auf die Patenterteilung: **02.12.1998**
(21) Anmeldenummer: 94115029.4
(22) Anmeldetag: 23.09.1994
(51) Int. Cl.: B60T 8/66

(54) **Antiblockierregelsystem**
Anti-lock braking system
Système de freinage anti-blocage

(30) Priorität: 22.10.1993 DE 4336080
(43) Veröffentlichungstag der Anmeldung: 26.04.1995
(73) Patentinhaber: ROBERT BOSCH GMBH, 70442 Stuttgart (DE)
(72) Erfinder: Meier, Thomas, Dipl.-Ing., D-71691 Freiberg (DE)

(56) Entgegenhaltungen:
- WO-A-88/07456
- WO-A-91/14604
- DE-A- 3 536 185
- FR-A- 2 591 961
- GB-A- 2 176 557

## Beschreibung

### Stand der Technik

Ein Antiblockierregelsystem mit den Merkmalen des Oberbegriffs des Anspruchs 1 ist aus der DE 37 07 235.6 bekannt. Dort bestimmt im Falle der Instabilität der Räder (z. B. Radschlupf) die mit dem Beschleunigungsmesser ermittelte Fahrzeugverzögerung die Steigerung der Referenzgeschwindigkeit.

In der GB,A,2 176 557 wird bei einem allradangetriebenen Fahrzeug mit einem Antiblockierregelsystem ein Durchdrehen der Räder durch eine übermäßige Beschleunigung erkannt. In Reaktion auf ein erkanntes Durchdrehen wird die Antiblockierregelung modifiziert.

### Vorteile der Erfindung

Die Erfindung nutzt den Fahrzeugbeschleunigungsgeber dazu (evtl. zusätzlich), den Anstieg der Referenzgeschwindigkeit in Phasen der Beschleunigung des Fahrzeugs zu begrenzen, um eine falsche Referenzlage aufgrund eines leichten Durchdrehens der Räder zu vermeiden. Eine zu hoch liegende Referenzgeschwindigkeit kann zu einer Unterbremsung des Fahrzeugs bei einer anschließenden Antiblockierregelung führen. Bei einem leichten Driften in der Kurve liegt die Referenzgeschwindigkeit bei Anwendung der Erfindung auf der sicheren Seite.

### Figurenbeschreibung

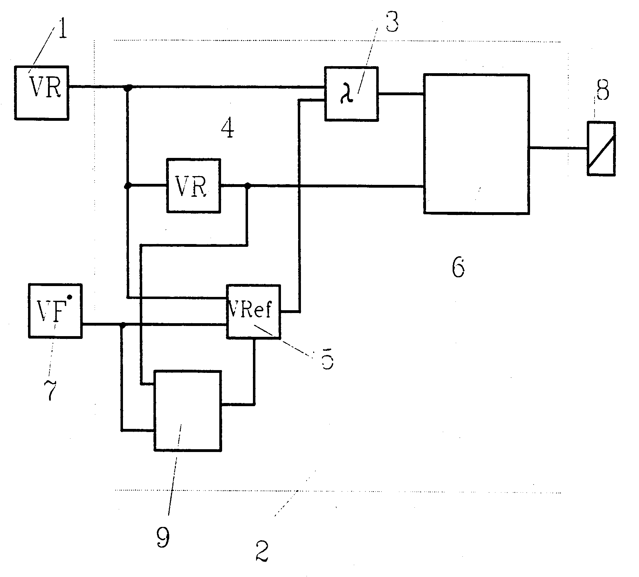

Anhand der Zeichnung wird ein Ausführungsbeispiel der Erfindung erläutert.

Mit 1 ist ein einem der vier angetriebenen Räder zugeordneter Radgeschwindigkeitssensor bezeichnet. Er liefert sein Radgeschwindigkeitssignal V_{R} an eine Auswerteschaltung 2, die ihrerseits einen Schlupfbildner 3, einen Differenzierer 4, einen Referenzbildner 5 und einen Block 6 zur Bildung des Instabilitätskriteriums enthält. Zur Schlupfbildung wird das Referenzgeschwindigkeitssignal V_{Ref} dem Schlupfbildner 3 zugeführt. Der Schlupfwert λ und die Radverzögerung -V_{R}^{·} und evt. auch die Radbeschleunigung +V_{R}^{·} werden dem Block 6 zugeführt, der im Falle einer Instabilität mittels eines Ventils 8 den Bremsdruck regelt.

Zur Bildung der Referenzgeschwindigkeit V_{Ref} wird die Radgeschwindigkeit V_{R} und die mit einem Fahrzeugbeschleunigungsmesser 7 gemessene Fahrzeugbeschleunigung V_{F} dem Referenzbildner 5 zugeführt.

Solange keine Radinstabilität vorliegt, bestimmt das Radgeschwindigkeitssignal V_{R} den Verlauf der Referenzgeschwindigkeit. Laufen die Räder in einen hohen Schlupf, dann folgt die Referenz nicht mehr der Radgeschwindigkeit. Vielmehr bestimmt jetzt die Fahrzeugverzögerung den Verlauf von V_{Ref}: Sinkt die Radgeschwindigkeit ab einem Zeitpunkt mit einem größeren Gradienten ab, als es der Fahrzeugverzögerung entspricht, dann folgt die Referenzgeschwindigkeit ausgehend von der Radgeschwindigkeit V_{R} an dem Zeitpunkt einem durch die Fahrzeugverzögerung vorgegebenen Verlauf.

Bei geringem µ kann es vorkommen, daß bei Fahrzeugbeschleunigung die Räder flach durchdrehen. Es wird dann eine zu hohe Referenz vorgetäuscht, wenn jetzt unmittelbar an ein solches Durchdrehen sich eine Instabilität anschließt (z.B. Panikbremsung). Um dies und ein daraus resultierendes Unterbremsen zu verhindern, wird in einem Vergleicher 9 die Radbeschleunigung V_{R}^{·} mit der Fahrzeugbeschleunigung V_{F}^{·} verglichen. Ist die Radbeschleunigung kleiner oder gleich der Fahrzeugbeschleunigung, bestimmt weiter die Radgeschwindigkeit V_{R} den Verlauf von V_{Ref}. Wird jedoch V_{R}^{·} größer als V_{F}^{·}, dann erzeugt der Vergleicher 9 ein Signal für den Referenzbildner 5, wodurch dann die gemessene Fahrzeugbeschleunigung V_{F}^{·} den weiteren Anstieg der Referenzgeschwindigkeit bestimmt. Die Steigerung der Referenzgeschwindigkeit ist somit auf die Fahrzeugbeschleunigung begrenzt. Der Vergleicher 9 ist derart ausgelegt, daß er nur zwischen 0 g und z. B. 0,35 g ein Ausgangssignal erzeugt, wenn V_{R} größer als V_{F} wird. (Dies ist der typische und damit kritische Bereich für flaches Durchdrehen auf niedrigen Reibbeiwerten).

## Patentansprüche

1. Antiblockierregelsystem für ein Fahrzeug, das wenigstens zeitweise insbesondere durch Einschalten von Sperren, mit Allradantrieb fährt, enthaltend Radsensoren zur Ermittlung der Radgeschwindigkeiten, eine Auswerteschaltung, der die Signale der Radsensoren zugeführt werden und einer Bremsdrucksteuereinheit, die aufgrund des Radbewegungsverhaltens der Räder den Bremsdruck im Sinne des Vermeidens eines Radblockierens regelt, wobei der Radschlupf bei der Regelung verwendet wird, wofür eine der Fahrzeuggeschwindigkeit angenäherte Referenzgeschwindigkeit gebildet wird, wobei ein Fahrzeugbeschleunigungssensor vorgesehen ist, und wobei die Referenzgeschwindigkeit bei nicht oder nur entsprechend der Fahrzeugverzögerung verzögerten Fahrzeugrädern durch die Radgeschwindigkeit bestimmt oder gestützt wird, dadurch gekennzeichnet, daß die Beschleunigung der Räder ermittelt und mit der vom Fahrzeugbeschleunigungsgeber gelieferten Fahrzeugbeschleunigung verglichen wird und daß beim Übersteigen der Fahrzeugbeschleunigung durch die Radbeschleunigung der Verlauf der Referenzgeschwindigkeit auf den Wert der Fahrzeugbeschleunigung begrenzt wird.

2. Antiblockiersystem nach Anspruch 1, dadurch gekennzeichnet, daß die Begrenzung im Bereich von 0 bis 0,35 g vorgenommen wird.

## Claims

1. Anti-lock brake control system for a vehicle which travels, at least at certain times, with all-wheel drive, in particular by switching on blocking mechanisms, containing wheel sensors for determining the wheel speeds, an evaluation circuit to which the signals of the wheel sensors are fed and a brake pressure control unit which, on the basis of the wheel movement behaviour of the wheels, controls the brake pressure with the effect of avoiding blocking of the wheels, the wheel slip being used in the control, for which a reference speed which is approximated to the speed of the vehicle is formed, a vehicle acceleration sensor being provided and the reference speed being determined or supported by the wheel speed when the wheels of the vehicle are not decelerated or are only decelerated in accordance with the deceleration of the vehicle, characterized in that the acceleration of the wheels is determined and is compared with the acceleration of the vehicle supplied by the vehicle acceleration sensor, and in that the characteristic curve of the reference speed is limited to the value of the acceleration of the vehicle when the acceleration of the vehicle is exceeded by the acceleration of the wheels.

2. Anti-lock brake control system according to Claim 1, characterized in that the limiting is performed in the region of 0 to 0.35 g.

## Revendications

1. Système anti-blocage des roues d'un véhicule ayant au moins à certains moments, par l'enclenchement de cliquets, toutes ses roues motrices, système comportant des détecteurs de roue donnant les vitesses de celles-ci, un circuit d'exploitation auquel sont adressés les signaux émis par les détecteurs de roue, une unité de commande de la pression de freinage régulant cette pression en fonction du comportement dynamique des roues de manière à éviter un blocage de roue, le patinage des roues étant utilisé dans la régulation, pour laquelle il est établi une vitesse de référence se rapprochant de celle du véhicule et il est prévu un détecteur de l'accélération du véhicule, la vitesse de référence étant définie par ou basée sur la vitesse de la roue lorsque les roues du véhicule ne sont pas accélérées ou le sont en correspondance avec l'accélération du véhicule.
caractérisé en ce que
l'accélération des roues est établie et comparée à l'accélération du véhicule donnée par l'accéléromètre de celui-ci et qu'en cas de dépassement de l'accélération du véhicule par l'accélération des roues, l'évolution de la vitesse de référence est limitée à la valeur de l'accélération du véhicule.

2. Système anti-blocage selon la revendication 1,
caractérisé en ce que
la limitation a lieu dans une plage allant de 0 à 0,35 g.
